# EUROPEAN PATENT SPECIFICATION

(11) **EP 3 951 177 B1**
(45) Date of publication and mention of the grant of the patent: **05.06.2024**
(21) Application number: 20778869.6
(22) Date of filing: 20.01.2020
(51) Int. Cl.: F04B 39/00, F16F 1/373

(54) **COMPRESSOR AND SUPPORT MEMBER FOR COMPRESSOR**
VERDICHTER UND STÜTZELEMENT FÜR VERDICHTER
COMPRESSEUR ET ÉLÉMENT DE SUPPORT POUR COMPRESSEUR

(30) Priority: 25.03.2019 JP 2019056741
(43) Date of publication of application: 09.02.2022
(73) Proprietor: Yamauchi Corporation, Hirakata, Osaka 573-1132 (JP)
(72) Inventor: SAITO, Toshio, Hirakata-shi, Osaka 573-1132 (JP)
(74) Representative: Müller Hoffmann & Partner
(86) International application number: PCT/JP2020/001709
(87) International publication number: WO 2020/195047

(56) References cited:
- CN-A- 106 089 638
- JP-A- S6 338 732
- JP-A- S6 338 732
- JP-A- H09 203 192
- JP-A- H09 203 192
- JP-A- S49 133 947
- JP-A- 2007 292 187
- JP-U- 3 043 655
- KR-B1- 100 715 044
- KR-B1- 100 715 044
- US-A- 5 123 625
- US-A- 5 123 625
- US-A1- 2008 086 966
- US-A1- 2008 196 987
- US-A1- 2008 230 676
- US-A1- 2009 243 172
- US-B1- 6 247 686

## Description

### Technical Field

The present invention relates to rubber support members for a compressor for elastically supporting on a base a compressor body that generates vibration, and compressors including the support member.

### Background Art

An example of a support rubber for a compressor is disclosed in Japanese Unexamined Patent Publication No. 2002-235665 (Patent Literature 1). FIG. 5 illustrates a main part of the invention described in Patent Literature 1.

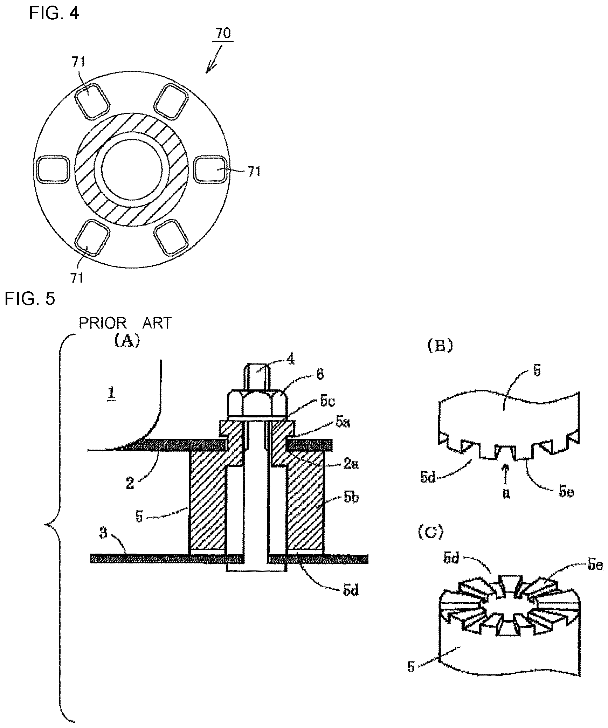

A support device for a compressor shown in FIG. 5 includes: attachment legs 2 provided around a lower part of a compressor 1; a plurality of bolts 4 disposed so as to stand on a base 3 facing the attachment legs 2; a plurality of supports 5 that elastically supports the compressor 1 with the upper parts of the supports 5 being attached to the attachment legs 2 and the bolts 4 being passed through the supports 5; and nuts 6 attached to the upper parts of the bolts 4.

The support 5 is a rubber-based elastic member, and an annular holding portion 5a that holds the periphery of the attachment hole 2a of the attachment leg 2 from both sides is provided along the outer periphery of the upper part of the support 5. The lower part of the support 5 is a body portion 5b that elastically supports between the attachment leg 2 and the base 3. A plurality of fan-shaped protrusions 5e is formed in a radial pattern on a bottom part 5d of the support 5.

According to the invention described in Patent Literature 1, as the plurality of protrusions 5 is formed on the bottom part 5d of the support 5, the contact area between the base 3 and the support 5 can be reduced, so that vibration from the compressor 1 is less likely to be transmitted to the base 3.

### Citation List

### Patent Literatures

Patent Literature 1: Japanese Unexamined Patent Publication No. 2002-235665
Further technological background can be found in KR 100 715 044 B1.

### Summary of Invention

### Technical Problem

In the support rubber for a compressor (support 5) disclosed in Patent Literature 1, the plurality of protrusions is formed on the bottom part, whereby the rigidity against load is reduced (reduced rigidity) and vibration that is transmitted to the base 3 is reduced.

In a refrigerator, an outdoor unit of an air conditioner, etc. that contain a compressor, the amplitude of vibration that occurs during normal operation is small, and the amount of deformation of the support rubber for a compressor is also relatively small. During transportation and installation of the compressor, on the other hand, large vibration with a large amplitude may be applied to the support rubber for a compressor due to large vertical movement or dropping impact, and the amount of deformation of the support rubber for a compressor is also relatively large. Accordingly, a function to damp vibration generated by a vibration generating portion and a function to reduce displacement that is caused by vibration or impact during transportation are required for the support rubber for a compressor.

A support rubber with reduced rigidity effectively damps vibration with a relatively small amplitude that occurs during normal operation, but is less likely to sufficiently damp vibration and impact with a relatively large amplitude that occur during transportation and installation, and the compressor is significantly displaced. As a result, a pipe connected to the compressor is subjected to large stress, which causes cracking and damage to the pipe. This may result in reduced reliability. On the other hand, a support rubber with increased rigidity effectively reduces vibration and impact that occur during transportation and installation and reduces displacement of the compressor, but cannot effectively damp vibration during normal operation.

It is an object of the present invention to provide a support member for a compressor capable of damping vibration with a relatively small amplitude (vibration that occurs during normal operation) and also capable of reducing displacement of a compressor that is caused by vibration with a relatively large amplitude (e.g., vibration or impact that occurs during transportation and installation), and a compressor including the support member.

### Solution to Problem

The invention is set out in the appended set of claims.

A compressor according to the present invention includes a compressor body and a rubber support member that elastically supports the compressor body on a base. The support member includes a body portion, an upper contact portion that is located on an upper end of the body portion and that contacts a bottom part of the compressor body from below, and a lower contact portion that is located on a lower end of the body portion and that contacts a top part of the base from above. Either or both of the upper contact portion and the lower contact portion have a first protrusion having a first height from a top or bottom surface of the body portion, and a second protrusion having a second height from the top or bottom surface of the body portion, the second height being smaller than the first height.

A rubber support member for a compressor according to the present invention elastically supports a compressor body on a base. The rubber support member includes: a body portion; an upper contact portion that is located on an upper end of the body portion and that contacts a bottom part of the compressor body from below; and a lower contact portion that is located on a lower end of the body portion and that contacts a top part of the base from above. Either or both of the upper contact portion and the lower contact portion have a first protrusion having a first height from a top or bottom surface of the body portion, and a second protrusion having a second height from the top or bottom surface of the body portion, the second height being smaller than the first height.

In one embodiment, a plurality of the first protrusions and a plurality of the second protrusions are provided. In this case, the first protrusions and the second protrusions are preferably alternately arranged about a central axis of the body portion.

In one embodiment, the first protrusion and the second protrusion have different shapes in cross section from each other.

The second height is, e.g., 30% to 70% of the first height.

In one embodiment, both the upper contact portion and the lower contact portion have the first protrusion and the second protrusion.

The rubber support member for a compressor preferably further includes a neck portion that extends upward from a central part of the body portion and that extends through the bottom part of the compressor body. In this case, the body portion and the neck portion of the rubber support member have in their central part a central hole through which a fixing rod is passed.

### Advantageous Effects of Invention

The support member for a compressor according to the present invention damps vibration with a relatively small amplitude (e.g., vibration that occurs during normal operation) by elastic compression and deformation of the first protrusion with the first height, and reduces vibration with a relatively large amplitude (e.g., vibration or impact that occurs curing transportation and installation) by elastic compression and deformation of the second protrusion as well as the first protrusion to reduce displacement of the compressor. The support member for a compressor according to the present invention can thus effectively perform a vibration damping function and a displacement reducing function for both vibration with a small amplitude and vibration with a large amplitude.

### Brief Description of Drawings

[FIG. 1] FIG. 1 illustrates a rubber support member for a compressor according to an embodiment of the present invention, where FIG. 1(a) is a plan view, FIG. 1(b) is a front view, and FIG. 1(c) is a bottom view.
[FIG. 2] FIG. 2 is a sectional view taken along line A-A in FIG. 1.
[FIG. 3] FIG. 3 illustrates a rubber support member for a compressor of a comparative example, where FIG. 3(a) is a plan view, FIG. 3(b) is a sectional view taken along line A-B in FIG. 3(b), and FIG. 3(c) is a bottom view.
[FIG. 4] FIG. 4 is a sectional view taken along line C-C in FIG. 3(b).
[FIG. 5] FIG. 5 illustrates a support device for a compressor disclosed in Japanese Unexamined Patent Publication No. 2002-235665, where FIG. 5(A) is a vertical sectional view of the support device, FIG. 5(B) is a perspective view of a main part of a support, and FIG. 5(C) is a perspective view illustrating a bottom part of the support.
[FIG. 6] FIG. 6 is a graph illustrating the relationship between load and displacement for the rubber support member for a compressor of the comparative example.
[FIG. 7] FIG. 7 is a graph illustrating the relationship between load and displacement for the rubber support member for a compressor according to the embodiment of the present invention.
[FIG. 8] FIG. 8 is a front view of a rubber support member for a compressor according to another embodiment of the present invention.
[FIG. 9] FIG. 9 is a front view of a rubber support member for a compressor according to still another embodiment of the present invention.
[FIG. 10] FIG. 10 is a partial sectional plan view of a rubber support member for a compressor according to yet another embodiment of the present invention.
[FIG. 11] FIG. 11 is a perspective view of a rubber support member for a compressor according to a further embodiment of the present invention.

### Description of Embodiments

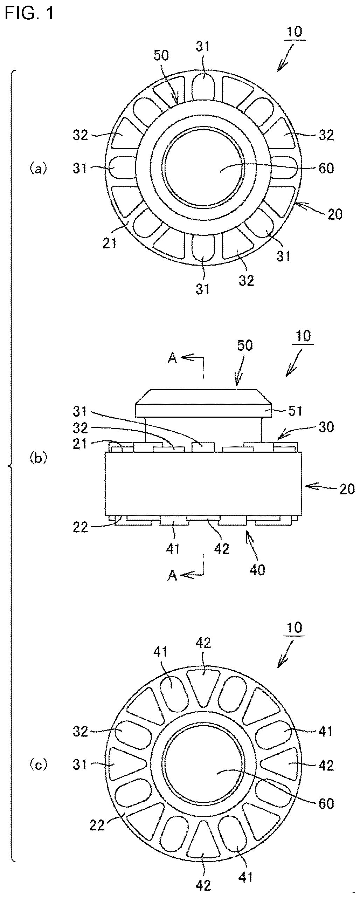

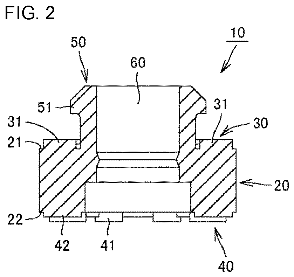

FIGS. 1 and 2 illustrate a rubber support member for a compressor (support rubber for a compressor) according to an embodiment of the present invention. The support rubber elastically supports a compressor body on a base to damp vibration. The way in which the support member is used is similar to that described in Japanese Unexamined Patent Publication No. 2002-235665 (Patent Literature 1).

A support rubber 10 for a compressor shown in FIGS. 1 and 2 includes: a cylindrical body portion 20 having a top surface 21 and a bottom surface 22; an upper contact portion 30 that is located on an upper end (top surface 21) of the body portion 20 and that contacts a bottom part of a compressor body from below; and a lower contact portion 40 that is located on a lower end (bottom surface 22) of the body portion 20 and that contacts a top part of a base from above. In the case where the compressor body has an attachment leg to which the support rubber is attached, the "bottom part of the compressor body" is a bottom part of the attachment leg. The base may be in any form as long as it supports the compressor body from below.

The support rubber 10 includes a neck portion 50 that extends upward from a central part of the body portion 20 and that extends through the bottom part of the compressor body. As shown in FIG. 2, the body portion 20 and the neck portion 50 have in their central part a central hole 60 through which a fixing member such as a bolt is passed. The neck portion 50 has a jaw 51 that engages with, e.g., a rubber attachment portion of the attachment leg of the compressor body from above and that is stopped by the rubber attachment portion.

In the illustrated embodiment, the upper contact portion 30 that contacts the bottom part of the compressor body from below has a plurality of first protrusions 31 and a plurality of second protrusions 32, both protruding upward from the top surface 21 of the body portion 20. The first protrusions 31 have a generally elliptical cross section, and the second protrusions 32 have a generally fan-shaped cross section. The first protrusions 31 have a predetermined height (first height), and the second protrusions 32 have a second height smaller than the first height. The second height of the second protrusions 32 is preferably 30% to 70%, more preferably 30% to 50%, of the first height of the first protrusions 31. In one embodiment, the height (first height) of the first protrusions 31 is 1.2 mm, and the height (second height) of the second protrusions 32 is 0.6 mm.

As shown in FIG. 1(a), the first protrusions 31 and the second protrusions 32 are alternately arranged about the central axis of the body portion 20.

The lower contact portion 40 that contacts the top part of the base from above also has a plurality of first protrusions 41 and a plurality of second protrusions 42, both protruding downward from the bottom surface 22 of the body portion 20. The first protrusions 41 have a generally elliptical cross section, and the second protrusions 42 have a generally fan-shaped cross section. The first protrusions 41 have a predetermined height (first height), and the second protrusions 42 have a second height smaller than the first height. The second height of the second protrusions 42 is preferably 30% to 70% of the first height of the first protrusions 41. In one embodiment, the height (first height) of the first protrusions 41 is 1.2 mm, and the height (second height) of the second protrusions 42 is 0.6 mm.

In order for the first protrusions 41 with a large height not to contact the second protrusions 42 with a small height when compressed and deformed, the distances between the first and second protrusions 41, 42 are preferably at least 0.5 mm or more, more preferably 1.0 mm or more.

As shown in FIG. 1(c), the first protrusions 41 and the second protrusions 42 are alternately arranged about the central axis of the body portion 20. In the illustrated embodiment, the first protrusions 31 and the second protrusions 32 of the upper contact portion 30 have the same shape and size as the first protrusions 41 and the second protrusions 42 of the lower contact portion 40, respectively. The first protrusions 31 of the upper contact portion 30 are aligned with the second protrusions 42 of the lower contact portion 40, and the second protrusions 32 of the upper contact portion 30 are aligned with the first protrusions 41 of the lower contact portion 40, as viewed in the axial direction.

An operation of damping vibration and reducing displacement of the compressor after attachment of the illustrated support rubber 10 to the compressor body will be described. When vibration with a relatively small amplitude is applied to the support rubber 10, the first protrusions 31 of the upper contact portion 30 and the first protrusions 41 of the lower contact portion 40 are first elastically compressed and deformed to damp the vibration. With vibration with a small amplitude, only the first protrusions 31, 41 are elastically compressed and deformed. At this time, the second protrusions 32, 42 with a small protrusion height are not in contact with the bottom part of the compressor body and the top part of the base and are not compressed and deformed.

When vibration or impact with a relatively large amplitude is applied to the support rubber 10, the second protrusions 32, 42 as well as the first protrusions 31, 41 are elastically compressed and deformed once the first protrusions 31, 41 are compressed and deformed to the same height as the second protrusions 32, 42. Rigidity of the support rubber is thus increased, and displacement of the compressor is reduced. When an even larger load is applied and the first protrusions 31, 41 and the second protrusions 32, 42 are collapsed to a protrusion height close to zero, the rigidity of the support rubber is further increased, and vibration of the large load is reduced.

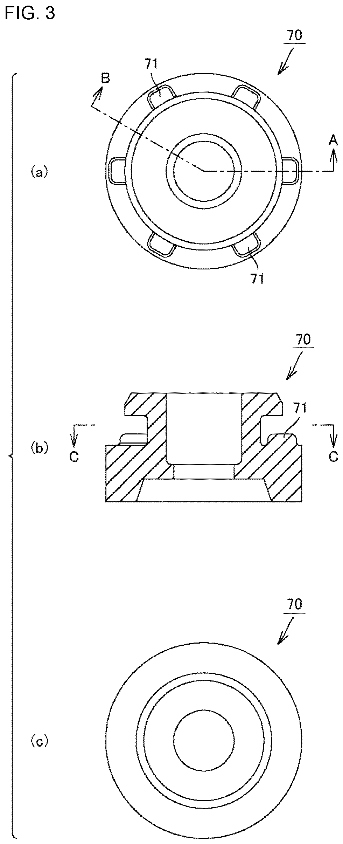

The inventors produced a support rubber 70 shown in FIGS. 3 and 4 as a comparative example. The support rubber 70 of the comparative example has substantially the same shape as the support rubber shown in FIGS. 1 and 2 except the upper contact portion and the lower contact portion.

As shown in FIGS. 3 and 4, the upper contact portion of the support rubber 70 of the comparative example has a plurality of protrusions 71 protruding upward from the top surface of the body portion. All of the plurality of protrusions 71 have the same height and have a generally quadrilateral cross section. The lower contact portion of the support rubber 70 of the comparative example is the bottom surface of the body portion and no protrusions protruding downward are formed on the lower contact portion.

The relationship between load and displacement was examined for the support rubber 10 according to the embodiment of the present invention shown in FIGS. 1 and 2 and the support rubber 70 of the comparative example shown in FIGS. 3 and 4. For the support rubber 10 according to the embodiment of the present invention, the height of the first protrusions 31, 41 was 1.2 mm, and the height of the second protrusions 32, 42 was 0.6 mm. The number of first protrusions 31, 41 was eight each, and the number of second protrusions 32, 42 was eight each. For the support rubber 70 of the comparative example, the height of the protrusions 71 was 1.5 mm, and the number of protrusions 71 was six.

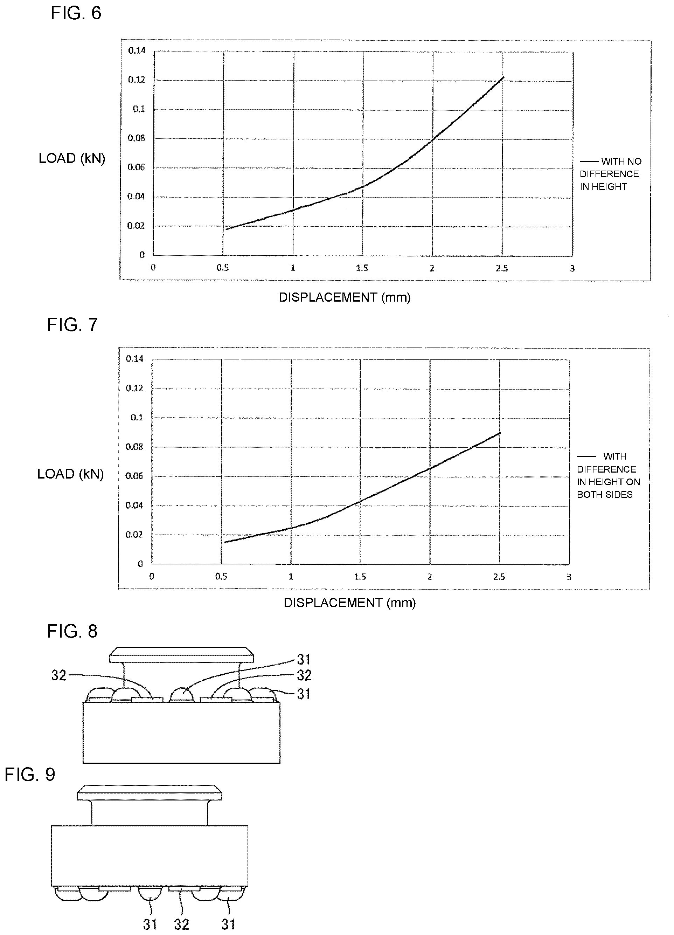

FIG. 6 is a graph illustrating the relationship between load and displacement for the support rubber 70 of the comparative example. In a region where the load is relatively small (0 to about 0.04 kN), the amount of displacement of the support rubber 70 increases linearly with an increase in load. On the other hand, in a region where the load is relatively large (about 0.04 kN or more), the protrusions 71 are completely collapsed, and the support rubber 70 receives the load by compression and deformation of the body portion. Accordingly, as the height of the protrusions 70 becomes closer to zero, the resistance of the support rubber to the load increases and the displacement-load curve rises continuously and sharply. For the support rubber 70 of the comparative example, the boundary between the low rigidity region (the amount of displacement is about 1.5 mm or less) and the high rigidity region (the amount of displacement is about 1.5 mm or more) is unclear.

FIG. 7 is a graph illustrating the relationship between load and displacement for the support rubber 10 according to the embodiment of the present invention. In a region where the load is relatively small (0 to about 0.03 kN), the support rubber 10 receives the load by compression and deformation of the first protrusions 31, 41 with a height of 1.2 mm (total height: 2.4 mm). In this low rigidity region, the amount of displacement of the support rubber 10 increases linearly with an increase in load.

Once the height of the first protrusions 31, 41 that are compressed and deformed with an increase in load decreases to 0.6 mm (1.2 mm in total), the second protrusion 32, 42 with a height of 0.6 mm (total height: 1.2 mm) also start being compressed and deformed. Accordingly, in a region where the load is relatively large (about 0.03 kN or more), the support rubber 10 receives the load by the compression and deformation of the second protrusions 32, 42 in addition to the compression and deformation of the first protrusions 31, 41. The relationship between load and displacement is therefore also substantially linear in the high rigidity region (region where both the first and second protrusions are compressed and deformed at the same time). A relatively clear boundary appears between the low rigidity region (region where only the first protrusions 31, 41 are compressed and deformed) and the high rigidity region (region where both the first protrusions 31, 41 and the second protrusions 32, 42 are compressed and deformed). The slope of the displacement-load line in the low rigidity region is gentle, while the slope of the displacement-load line in the high rigidity region is steep.

For the support rubber 10 according to the embodiment of the present invention, product design is easy because the boundary between the low rigidity region and the high rigidity region against vibration can be clearly set. Vibration damping characteristics in the low rigidity region can be easily adjusted by changing the shape, size, etc. of the first protrusions 31, 41. Compressor displacement reducing characteristics in the high rigidity region can be easily adjusted by changing the shape, size, etc. of the second protrusions 32, 42.

The support rubber 10 shown in FIGS. 1 and 2 is an embodiment of the present invention and is an example of the rubber support member for a compressor according to the present invention. Examples of a support rubber for a compressor according to other embodiments will be described with reference to FIGS. 8 to 11.

In an embodiment shown in FIG. 8, only the upper contact portion located on the upper end of the body portion has the first protrusions 31 and the second protrusions 32, and the lower contact portion located on the lower end of the body portion has a flat shape with no protrusions. In an embodiment shown in FIG. 9, on the other hand, only the lower contact portion has the first protrusions 31 and the second protrusions 32, and the upper contact portion has a flat shape with no protrusions. The tip ends of the first protrusions 31 shown in FIGS. 8 and 9 have a spherical convex shape rather than a flat shape.

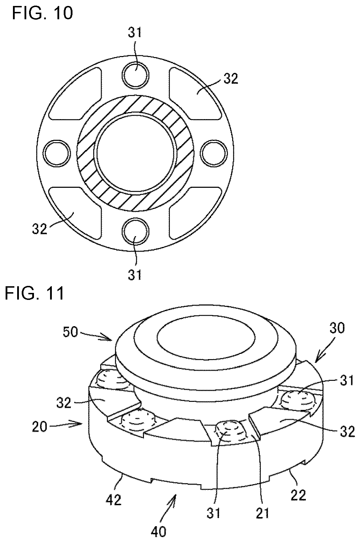

In an embodiment shown in FIG. 10, the number of first protrusions 31 is four, and the first protrusions 31 have a circular cross section. The number of second protrusions 32 is four, and the second protrusions 32 have a curved trapezoidal cross section.

An embodiment shown in FIG. 11 corresponds to the embodiment shown in FIG. 1 with the fan-shaped second protrusions 32, 42 having an increased area. Each of the fan-shaped second protrusions 32, 42 has an outer peripheral surface continuous with the outer peripheral surface of the body portion 20, and the inner peripheral surfaces of the fan-shaped second protrusions 32, 42 are in contact with the neck portion 50.

In the embodiment shown in FIG. 11, a recess is formed between adjacent ones of the second protrusions 32, 42, and the first protrusions 31, 41 are formed in the recesses. A reference surface that serves as a reference for the heights of the first protrusions 31, 41 and the second protrusions 32, 42, namely the "top or bottom surface of the body portion," is the bottom surface of the recess. The first protrusions 31, 41 have the first height from the top or bottom surface of the body portion, and the second protrusions 32, 42 have the second height smaller than the first height.

Although the embodiments of the present invention are described above with reference to the drawings, the present invention is not limited to the embodiments described herein, and various modifications can be made within the scope of the appended claims.

### Industrial Applicability

The present invention can be advantageously used as a rubber support member for a compressor that elastically supports a compressor body.

### Reference Signs List

1: Compressor, 2: Attachment Leg, 2a: Attachment Hole, 3: Base, 4: Bolt, 5: Support, 5a: Holding Portion, 5b: Body Portion, 5c: Hole, 5d: Bottom Part, 5e: Protrusion, 6: Nut, 10: Support Rubber for Compressor, 20: Body Portion, 21: Top Surface, 22: Bottom Surface, 30: Upper Contact Portion, 31: First Protrusion, 32: Second Protrusion, 40: Lower Contact Portion, 41: First Protrusion, 42: Second Protrusion, 50: Neck Portion, 51: Jaw, 60: Central Hole, 70: Support Rubber of Comparative Example, and 71: Protrusion.

## Claims

1. A rubber support member (10) for a compressor for elastically supporting a compressor body on a base, comprising:
a body portion (20),
an upper contact portion (30) that is located on an upper end (21) of the body portion (20) and that is contactable to a bottom part of the compressor body from below, and
a lower contact portion (40) that is located on a lower end (22) of the body portion (20) and that is contactable to a top part of the base from above, wherein
either or both of the upper contact portion (30) and the lower contact portion (40) have a first protrusion (31, 41) having a first height from a top or bottom surface (21, 22) of the body portion (20), and a second protrusion (32, 42) having a second height from the top or bottom surface (21, 22) of the body portion (20), the second height being smaller than the first height, the rubber support member (10) further comprising:
a neck portion (50) that extends upward from a central part of the body portion (20) and that is extendable through the bottom part of the compressor body, wherein
the body portion (20) and the neck portion (50) have in their central part a central hole (60) through which a fixing rod can be passed, wherein
a plurality of the first protrusions (31, 41) and a plurality of the second protrusions (32, 42) are provided, and
the first protrusions (31, 41) and the second protrusions (32, 42) are alternately arranged about a central axis of the body portion (20), wherein the first protrusions (31, 41) have a substantially elliptical cross section and the second protrusions (32, 42) have a substantially fan-shaped cross section.

2. A compressor, comprising:
a compressor body; and
a rubber support member (10) according to claim 1.

3. The support member (10) for a compressor according to claim 1, wherein
the second height is 30% to 70% of the first height.

4. The support member (10) for a compressor according to claim 1 or 3, wherein
both the upper contact portion (30) and the lower contact portion (40) have the first protrusions (31, 41) and the second protrusions (32, 42).

## Patentansprüche

1. Gummistützelement (10) für einen Verdichter zum elastischen Abstützen eines Verdichtergehäuses auf einer Basis, aufweisend:
einen Rumpfbereich (20),
einen oberen Kontaktbereich (30), der an einem oberen Ende (21) des Rumpfbereichs (20) gelegen ist und der mit einem Bodenteil des Verdichtergehäuses von unten in Kontakt gebracht werden kann, und
einen unteren Kontaktbereich (40), der an einem unteren Ende (22) des Rumpfbereichs (20) gelegen ist und der mit einem Oberteil der Basis von oben in Kontakt gebracht werden kann, wobei
entweder der obere Kontaktbereich (30) oder der untere Kontaktbereich (40) oder beide eine erste Erhebung (31, 41) mit einer ersten Höhe von einer Ober- oder Unterseite (21, 22) des Rumpfbereichs (20) aus und eine zweite Erhebung (32, 42) mit einer zweiten Höhe von der Ober- oder Unterseite (21, 22) des Rumpfbereichs (20) aus aufweisen, wobei die zweite Höhe geringer als die erste Höhe ist, wobei das Gummistützelement (10) ferner aufweist:
einen Halsbereich (50), der sich von einem zentralen Teil des Rumpfbereichs (20) aus nach oben erstreckt und der durch den Bodenteil des Verdichtergehäuses verlängerbar ist, wobei
der Rumpfbereich (20) und der Halsbereich (50) in ihrem zentralen Teil ein zentrales Loch (60) aufweisen, durch das eine Befestigungsstange geführt werden kann, wobei
eine Vielzahl der ersten Erhebungen (31, 41) und eine Vielzahl der zweiten Erhebungen (32, 42) vorgesehen sind und
die ersten Erhebungen (31, 41) und die zweiten Erhebungen (32, 42) um eine zentrale Achse des Rumpfbereichs (20) abwechselnd angeordnet sind, wobei die ersten Erhebungen (31, 41) einen im Wesentlichen elliptischen Querschnitt aufweisen und die zweiten Erhebungen (32, 42) einen im Wesentlichen fächerförmigen Querschnitt aufweisen.

2. Verdichter, aufweisend:
ein Verdichtergehäuse; und
ein Gummistützelement (10) nach Anspruch1.

3. Stützelement (10) für einen Verdichter nach Anspruch 1, wobei
die zweite Höhe 30 % bis 70 % der ersten Höhe beträgt.

4. Stützelement (10) für einen Verdichter nach Anspruch 1 oder 3, wobei
sowohl der obere Kontaktbereich (30) als auch der untere Kontaktbereich (40) die ersten Erhebungen (31, 41) und die zweiten Erhebungen (32, 42) aufweisen.

## Revendications

1. Organe de support en caoutchouc (10) pour un compresseur pour supporter élastiquement
un corps de compresseur sur une base, comprenant :
une partie de corps (20),
une partie de contact supérieure (30) qui est située sur une extrémité supérieure (21) de la partie de corps (20) et qui peut être mise en contact avec une partie inférieure du corps de compresseur par le dessous, et
une partie de contact inférieure (40) qui est située sur une extrémité inférieure (22) de la partie de corps (20) et qui peut être mise en contact avec une partie supérieure de la base par le dessus, dans lequel
l'une ou l'autre ou les deux parmi la partie de contact supérieure (30) et la partie de contact inférieure (40) présentent une première saillie (31, 41) ayant une première hauteur à partir d'une surface supérieure ou inférieure (21, 22) de la partie de corps (20), et une deuxième saillie (32, 42) ayant une deuxième hauteur à partir de la surface supérieure ou inférieure (21, 22) de la partie de corps (20), la deuxième hauteur étant inférieure à la première hauteur, l'organe de support en caoutchouc (10) comprenant en outre :
une partie de col (50) qui s'étend vers le haut à partir d'une partie centrale de la partie de corps (20) et qui est extensible à travers la partie inférieure du corps de compresseur, dans lequel
la partie de corps (20) et la partie de col (50) présentent, dans leur partie centrale, un trou central (60) à travers lequel une tige de fixation peut être passée, dans lequel
une pluralité des premières saillies (31, 41) et une pluralité des deuxièmes saillies (32, 42) sont fournies, et
les premières saillies (31, 41) et les deuxièmes saillies (32, 42) sont agencées en alternance autour d'un axe central de la partie de corps (20), dans lequel les premières saillies (31, 41) présentent une section transversale sensiblement elliptique et les deuxièmes saillies (32, 42) présentent une section transversale sensiblement en forme d'éventail.

2. Compresseur, comprenant :
un corps de compresseur ; et
un organe de support en caoutchouc (10) selon la revendication 1.

3. Organe de support (10) pour un compresseur selon la revendication 1, dans lequel
la deuxième hauteur représente 30 % à 70 % de la première hauteur.

4. Organe de support (10) pour un compresseur selon la revendication 1 ou 3, dans lequel
la partie de contact supérieure (30) et la partie de contact inférieure (40) présentent toutes deux les premières saillies (31, 41) et les deuxièmes saillies (32, 42).
